# EUROPEAN PATENT SPECIFICATION

(11) **EP 3 105 056 B1**
(45) Date of publication and mention of the grant of the patent: **17.10.2018**
(21) Application number: 15704933.9
(22) Date of filing: 09.02.2015
(51) Int. Cl.: B32B 27/08, B32B 27/20, B32B 27/32

(54) **FILM COMPRISING ACRYLIC BEADS FOR ENHANCING MATTE APPEARANCE**
FOLIE ENTHALTEND ACRYLPERLEN ZUM VERBESSERN DES MATTEN AUSSEHENS
FILM COMPRENANT DES PERLES D'ACRYLATE POUR AMÉLIORER L'APPARENCE MATE

(30) Priority: 11.02.2014 US 201461938529 P
(43) Date of publication of application: 21.12.2016
(73) Proprietor: Dow Global Technologies LLC, Midland, MI 48674 (US); Rohm and Haas Company, Philadelphia, PA 19106 (US)
(72) Inventor: SINGH, Rajasingh Solomon Thomas Udhaya, 6331 Huenenburg (CH); WILLIAMSON, Alexander, Rosharon, TX 77583 (US); LAFLEUR, Edward E., Holland, PA 18966 (US); SUNDARAM, Sekhar, Texas 77541 (US); GU, Xinyu, San Mateo, California 94403 (US); BHATTACHARJEE, Debkumar, Blue Bell, PA 19422 (US); RAY, Himal, Collegeville, PA 19426 (US)
(74) Representative: Boult Wade Tennant LLP
(86) International application number: PCT/US2015/014953
(87) International publication number: WO 2015/123126

(56) References cited:
- EP-A1- 1 518 887
- DE-A1-102005 058 907
- US-A1- 2009 097 123

## Description

### FIELD

This invention relates to matte polyolefin films which are particularly useful for packaging applications. More particularly, the invention relates to matte polyolefin films comprising a base layer and a skin layer.

### INTRODUCTION

Matte polyolefin films are used for magazine covers and food packaging. Current commercial technologies use films comprising blends of polyethylene and polypropylene to give light scattering due to phase separated domains, or films containing inorganic filler particles. However, it is difficult to prepare matte polyolefin films having good haze values without causing a loss in transparency. Therefore, matte polyolefin films having increased haze without loss of transparency are desired.

EP 1 518 887 A1 and DE 10 2005 058 907 A1 disclose matte, multilayer, oriented films comprising inorganic particles.

### SUMMARY OF THE INVENTION

In one broad embodiment of the present invention, there is disclosed a film comprising, consisting of, or consisting essentially of: a) at least one base layer comprising a thermoplastic polymeric matrix material; and b) a skin layer comprising a thermoplastic polymeric matrix material and from 5 wt % to 80 wt % of polymeric particles having an average particle diameter from 0.5 µm to 15 µm, a refractive index from 1.46 to 1.7, and at least 60 mole % of acrylic monomer units; wherein the film is stretched by a factor of 2 to 8 uniaxially or biaxially; and wherein after stretching, the skin layer has a thickness that is between 50% and 200% of the diameter of the polymeric particles.

In another broad embodiment of the present invention, there is disclosed a method of preparing a film comprising, consisting of, or consisting essentially of a) preparing a concentrate comprising i) a thermoplastic polymeric matrix material; and ii) polymeric particles having an average particle diameter from 0.5 µm to 15 µm, a refractive index from 1.46 to 1.7 and at least 60 mole % of acrylic monomer units; b) forming a multi-layer cast or blown film wherein the film comprises at least two layers, and where the external layer comprises the concentrate of step a); and c) stretching the film at a temperature above the crystallization temperature of the thermoplastic polymeric matrix material, uni-axially, or biaxially.

### DETAILED DESCRIPTION

The film comprises a base layer. In various embodiments, the base layer is a thermoplastic polymeric matrix material. In various embodiments, the thermoplastic polymeric matrix material comprises polyolefins. Polyolefins include polymers or copolymers of alkenes, those having from two to ten carbon atoms in various embodiments, two to eight carbon atoms in various other embodiments, and two to four carbon atoms in various other embodiments. Examples of polyolefins suitable for use in the base layer include, but are not limited to polypropylene, polyethylene, polybutylene, and copolymers and blends thereof. The weight-average molecular weight of the polyolefin used in this invention is from 20,000 to 500,000 in various embodiments, and is from 50,000 to 300,000 in various other embodiments.

Polyolefin homo and copolymers can also be used. Examples include, but are not limited to the following: polypropylene and polyethylene homo and copolymers containing from 0 to 40 weight percent (wt %) ethylene, propylene, butene, octene and/or hexene.

Commercial grades include but are not limited to VERSIFY™ plastomers, Dowlex, Engage, Affinity, and LDPE resins, available from The Dow Chemical Company.

Optionally, the base layer may comprise compatible or incompatible blends of polyolefins with other (co)polymers, or may contain inorganic fillers, or additives such as slip aids, anti-block, and anti-oxidants.

After stretching, the base layer will generally have a thickness in the range of from 10 microns (µm) to 250 µm. In other embodiments, the base layer will have a thickness in the range of 15 µm to 150 µm and a thickness in the range of from 15 µm to 100 µm in yet other embodiments.

The skin layer comprises polymeric particles dispersed in a base polymer. The range of possible compositions for the base polymer of the skin layer is the same as the range of possible compositions described for the base layer.

Polymeric particles comprise organic polymers, preferably addition polymers, and preferably are substantially spherical. Average particle diameter is determined as the arithmetic mean particle diameter. The polymeric particles have an average particle diameter no less than 0.5 µm. All individual values and subranges of 0.5 µm and higher are included herein and disclosed herein; for example, the polymeric particles can have an average particle diameter of at least 0.7 µm, at least 0.9, at least 1 µm, at least 1.5 µm, at least 2 µm, at least 2.5 µm, at least 3 µm, or at least 3.5 µm. These particles have an average particle diameter no greater than 15 µm. All individual values and subranges of 15 µm and less are included herein and disclosed herein; for example, the particles can have an average particle diameter of no greater than 10 µm, no greater than 8 µm, no greater than 6 µm, or no greater than 5.5 µm. In various embodiments, the polymeric particles have a particle size distribution indicating a single mode; the width of the particle size distribution at half-height is from 0.1 to 3 µm in various embodiments, and is from 0.2 to 1.5 µm in various other embodiments. The film may contain particles having different average diameters provided that particles of each average diameter have a particle size distribution as described immediately above. The particle size distribution is determined using a particle size analyzer.

Refractive index (RI) values are determined at the sodium D line, where λ = 589.29 nm at 20 °C, unless specified otherwise. Generally, the refractive index of the polymeric particle is from 1.46 to 1.7. All individual values and subranges from 1.46 to 1.7 are included herein and disclosed herein; for example, the refractive index is from 1.52 to 1.68, from 1.53 to 1.65, or from 1.54 to 1.6. Generally, the refractive index of the continuous polymeric phase is from 1.4 to 1.6. All individual values and subranges from 1.4 to 1.6 are included herein and disclosed herein; for example the refractive index of the continuous polymeric phase is from 1.45 to 1.55, from 1.47 to 1.53, or from 1.48 to 1.52. Generally, the refractive index of the polymeric particle is greater than the refractive index of the continuous polymeric phase in the infrared region, i.e., from 800-2500 nm.

Refractive index differences stated herein are absolute values. Generally, the refractive index difference (i.e., the absolute value of the difference) measured from 800 nm to 2500 nm between the polymeric particle and the continuous polymeric phase is at least 0.06. All individual values and subranges of 0.06 and greater are included herein and disclosed herein; for example, the refractive difference is at least 0.08, at least 0.09, or at least 0.1. Generally, the refractive index difference measured from 800 nm to 2500 nm between the polymeric particle and the continuous polymeric phase is no greater than 0.2. All individual values and subranges of 0.2 and less are included herein and disclosed herein; for example, the refractive index difference is no greater than 0.17, or is no greater than 0.15. Generally, the refractive index difference measured from 400 nm to 800 nm between the polymeric particle and the continuous polymeric phase is at least 0.04. All individual values and subranges of 0.04 and greater are included herein and disclosed herein; for example, the refractive index difference is at least 0.05, at least 0.06, at least 0.07, or at least 0.08. Generally, the refractive index difference measured from 400 nm to 800 nm between the polymeric particle and the continuous polymeric phase is no greater than 0.2, is no greater than 0.15 in various other embodiments, and is no greater than 0.1 in various other embodiments.

In various embodiments, the polymeric particle in the skin layer of the film is one having a continuous refractive index gradient ("GRIN" particle, see, e.g., US 2009/0097123). GRIN particles have a refractive index which increases continuously from the center of the particles to the surface. Generally, GRIN particles have a refractive index at the surface from 1.46 to 1.7. All individual values and subranges between 1.46 and 1.7 are included herein and disclosed herein; for example, the refractive index at the surface is from 1.52 to 1.68, from 1.53 to 1.65, or from 1.54 to 1.6. Generally, GRIN particles have a refractive index at the center from 1.46 to 1.7. All individual values and subranges between 1.46 and 1.7 are included herein and disclosed herein, for example, the refractive index at the center is from 1.46 to 1.52, or 1.47 to 1.51. or 1.55 to 1.6 or 1.6 to 1.7.

The GRIN lens layer provides a unique solution to the multilayer film. In the following, is a description of the properties of the micro GRIN lens.

The GRIN lens reduce the loss of light and minimize spherical and chromatic aberration. Because the refractive index of the GRIN sphere lens varies continuously within the lens media a unique focus is defined by light rays that transmit through the lens. A consequence of this is the observation that light rays are bent with the change in refractive index. The bending of the light rays results in, the elimination of light loss through total internal reflection, and the creation of a well defined focal point and focal length, unique to the spherical lens geometry.

The GRIN polymer particles are spherical in geometry and possess unique morphology. There are two well defined cases of GRIN polymer particles: In the less familiar case, which is described as case I, the refractive index of the spherical particle decreases continuously from the surface of the particle to its central core. In the well known second type of GRIN polymer particle, case II; the refractive index of the particle increases continuously from the outer spherical surface of the particle to the inner core. These lens-like polymer particles enhance the refraction of light rays incident upon the polymeric matrix in which these particles are coated or dispersed. The overall effect of high gain in optical intensity, from enhanced light refraction, is a reduction in loss of incident light rays to reflection and diffraction. Consequently, the particles enhance light diffusion, in case I; and transmission with low loss of photons to total internal reflection, in case II.

GRIN particles may have a core derived from a polymer seed used to produce the GRIN particle. Generally, the core of the GRIN particle is no more than 95 wt% of the particle, is no more than 80 wt% in various other embodiments, is no more than 60 wt% in various other embodiments, is no more than 40 wt% in various other embodiments, and is no more than 20 wt% in various other embodiments. The refractive index of a GRIN particle for purposes of calculating a refractive index difference is the refractive index at the particle surface. The refractive index can vary from high in the core to low on the surface of the particle and low in the core and high on the surface of the particle. Hence the center of the particle can have refractive index of 1.61 and surface of 1.40.

The variation in refractive index is measured by the Mach-Zehnder Interference Microscope. The measuring technique, defined as the shearing interference method, is centered around the determination of the optical path difference. The path difference is understood to be the difference between two optical path lengths which are caused by differences in the refractive index and or thickness. The interference-microscopic path difference is the difference between the optical path length in an object and that in its surroundings. The optical path length S is the product of the distance d traversed by the light rays and the refractive index n of the medium that the light rays pass through.

After synthetic preparation, the spheres are evaluated for optical properties (refractive index profile by path difference) by first immersion in a refractive index matching fluid which has refractive index (N_{d} = 1.54) at 25°C. The total magnification is approximately 110. The interference or fringe patterns are taken by a CCD camera in which the pixels were estimated, after calibration with a microscope scale bar, to be about 100 nm in the object plane.

The polymeric particles contain acrylic monomers. Acrylic monomers include acrylic acid (AA), methacrylic acid (MAA), esters of AA and MAA, itaconic acid (IA), crotonic acid (CA), acrylamide (AM), methacrylamide (MAM), and derivatives of AM and MAM, e.g., alkyl (meth)acrylamides. Esters of AA and MAA include, but are not limited to, alkyl, hydroxyalkyl, phosphoalkyl and sulfoalkyl esters, e.g., methyl methacrylate (MMA), ethyl methacrylate (EMA), butyl methacrylate (BMA), hydroxyethyl methacrylate (HEMA), hydroxyethyl acrylate (HEA), hydroxypropyl methacrylate (HPMA), hydroxybutyl acrylate (HBA), methyl acrylate (MA), ethyl acrylate (EA), butyl acrylate (BA), 2-ethylhexyl acrylate (EHA), cyclohexyl methacrylate (CHMA), benzyl acrylate (BzA) and phosphoalkyl methacrylates (e.g., PEM). The polymeric particles comprise at least 60 mole percent (mole %) of acrylic monomer units. All individual values and subranges of 60 mole % and greater are included herein and disclosed herein; for example, the polymeric particles can include at least 65 mole % of acrylic monomer units, at least 70 mole % of acrylic monomer units, at least 75 mole % of acrylic monomer units, or at least 80 mole % of acrylic monomer units. The polymeric particles can also include styrenic monomers which can include styrene, α-methylstyrene; 2-, 3-, or 4-alkylstyrenes, including methyl- and ethylstyrenes. In an embodiment, the styrenic monomer is styrene.

Generally, the polymeric particles comprise at least 70 mole % of acrylic and styrenic monomer units. All individual values and subranges of 70 mole % and greater are included herein and disclosed herein; for example, the polymeric particles comprise at least 80 mole % of acrylic and styrenic monomer units, at least 90 mole % of acrylic and styrenic monomer units, at least 95 mole % of acrylic and styrenic monomer units, or at least 97 mole % of acrylic and styrenic monomer units. Generally, the polymeric particle also comprises from 0 to 5 mole % of acid monomer units (e.g., acrylic acid (AA), methacrylic acid (MAA), itaconic acid (IA), crotonic acid (CA), or from 0.5 to 4% AA and/or MAA, and may also contain small amounts of residues of vinyl monomers.

The polymeric particles can also contain crosslinkers. Crosslinkers are monomers having two or more ethylenically unsaturated groups, or coupling agents (e.g., silanes) or ionic crosslinkers (e.g., metal oxides). Crosslinkers having two or more ethylenically unsaturated groups may include, e.g., divinylaromatic compounds, di-, tri- and tetra-acrylate or methacrylate esters, di-, tri- and tetra-allyl ether or ester compounds and allyl acrylate or allyl methacrylate. Examples of such monomers include divinylbenzene (DVB), trimethylolpropane diallyl ether, tetraallyl pentaerythritol, triallyl pentaerythritol, diallyl pentaerythritol, diallyl phthalate, diallyl maleate, triallyl cyanurate, Bisphenol A diallyl ether, allyl sucroses, methylene bisacrylamide, trimethylolpropane triacrylate, allyl methacrylate (ALMA), ethylene glycol dimethacrylate (EGDMA), hexane-1,6-diol diacrylate (HDDA) and butylene glycol dimethacrylate (BGDMA). Generally, the amount of polymerized crosslinker residue in the polymeric particle is no more than 10%. All individual values and subranges of 10% or less are included herein and disclosed herein; for example, the polymerized crosslinker residue in the polymeric particles is no more than 9%, no more than 8%, no more than 7%, or no more than 6%. Generally, the amount of polymerized crosslinker residue in the polymeric particle is at least 0.1%. All individual values and subranges of 0.1% or greater are included herein and disclosed herein; for example, the amount of polymerized crosslinker residue in the polymeric particle is at least 0.5%, at least 1%, at least 2%, or at least 3%. Generally, if crosslinkers are present, they have a molecular weight from 100 to 250. All individual values and subranges from 100 to 250 are included herein and disclosed herein; for example, the crosslinkers can have a molecular weight from 110 to 230, from 110 to 200, or from 115 to 160. Generally, crosslinkers are difunctional or trifunctional, i.e., they are diethylenically or triethylenically unsaturated, respectively.

The polymeric particles are generally prepared in an aqueous medium by known emulsion polymerization techniques, followed by spray drying of the resulting polymer latex. Spray drying typically results in clumps of polymeric particles having an average diameter of 0.5 to 15 µm.

The polymeric particles are generally present in the skin layer in a range of 5 weight (wt) % to 80 wt %. All individual values and ranges from 5 wt % to 80 wt % are included herein and disclosed herein; for example, the polymeric particles can be present in the skin layer in a range of 10 wt % to 80 wt %, 10 wt % to 70 wt %, 20 wt % to 70 wt %, 30 wt % to 80 wt %, and 40 wt % to 80 wt %.

In various embodiments, the skin layer can also comprise other polymers or copolymers that are compatible or incompatible with the base layer(s), inorganic fillers, or additives such as slip aids, anti-block, dispersants, or anti-oxidants. The polymers and additives useful in the base layer, as described above, can also be used in the skin layer.

After stretching, the skin layer will generally have a thickness in the range of 0.5 µm to 5 µm. In other embodiments, the skin layer will have a thickness in the range of 1 µm to 3 µm and a thickness in the range of from 1 µm to 2 µm in yet other embodiments. The thickness of skin layer is between 50 to 200% of the average diameter of the polymeric particles. The thickness of the skin layer is between 75 to 150% of the average diameter of the polymeric particles in other embodiments, and is between 75 to 125% of the average diameter of the polymeric particles in yet other embodiments.

After stretching, the thickness ratio of the base layer(s) to the skin layer is generally in the range of from 2 to 1, is from 5 to 1 in various other embodiments and is from 10 to 1 in various other embodiments.

The skin layer of the film of the present invention is generally produced by compounding a mixture of the thermoplastic polymeric matrix material and the polymeric particles to form a concentrate. To prepare the concentrate, the polymeric particles can be dry-blended with pellets of the base resin, and optionally other additives, by the "shake-in-bag" method, or by using a mechanical mixer. This mixture can then be fed into a twin-screw extruder, and the extrudate cooled in a water-bath or by a stream of air, before being pelletized. The concentrate can then optionally be combined with more base resin for dilution, and optionally other additives.

The base layer(s) also comprise a thermoplastic polymeric matrix material. This thermoplastic polymeric matrix material can be the same as or different than the thermoplastic polymeric matrix material used to form the concentrate containing the polymeric particles. The concentrate and the components of the base layer(s) are co-extruded into a cast film on a cast-film line, or a blown-film on a blown-film line. Multi-layer films can be produced on these lines, wherein the layer containing the polymeric beads is an external/skin layer. The multi-layer film can contain between two and 9 or more layers.

In various embodiments, the film is substantially free of inorganic fillers, i.e., it contains less than 5 wt% inorganic fillers. All individual values and subranges of 5% or less are included herein and disclosed herein, for example the film contains less than 2 wt% inorganic fillers, less than 1 wt% inorganic fillers, less than 0.5 wt% inorganic fillers, or less than 0.2 wt% inorganic fillers. A dispersant can be added to aid in dispersing the particles, generally in an amount from 0.1 wt% to 15 wt%, based on the entire film. All individual values and subranges between 0.1 wt% and 15 wt% are included herein and disclosed herein, for example, at least 0.5 wt% of dispersant, at least 1 wt% of dispersant, no more than 15 wt% of dispersant, no more than 12 wt% of dispersant, no more than 10 wt% of dispersant, no more than 8 wt% of dispersant, or no more than 6 wt% of dispersant. In various embodiments, the dispersant is an polyolefin-acrylic copolymer having from 60 to 95 wt% polyolefin units and 5 to 40 wt% acrylic monomer units. The polyolefin-acrylic copolymer is 70 to 90 wt% polyolefin and 10 to 30 wt% acrylic in various other embodiments. In various embodiments, the acrylic monomers are esters of AA or MAA, one- to twelve-carbon alkyl esters in various embodiments, and two- to eight-carbon esters of AA in various other embodiments. In other embodiments the acrylic monomers are AA, MAA or salts thereof.

The film can be stretched by any suitable method known to those skilled in the art such as, for example, uniaxially or biaxially. The stretching can be performed by any suitable method known to those skilled in the art. In various embodiments, the stretching occurs at 125°C, with 2 minutes pre-heat time, 30mm / second stretch rate, and 2 minutes cooling after stretching.

The film is stretched by a factor of 2 to 8. All individual ranges between 2 and 8 are included herein and disclosed herein; for example, the film can be stretched by a factor of 2.5 to 7, 3 to 7, 3 to 6.5, 3 to 6, 3 to 5.5, 3 to 5, 3 to 4.5, or 3 to 4.

Films of the present invention generally have a haze in the range of from 40 to 99% and transmittance in the range of from 85 to 98% after stretching.

Films of the present invention can be used in a variety of applications including, but not limited to book covers, magazine covers, and food packages.

### EXAMPLES

A mixture of acrylic beads (EXL-5138, 0.85 microns diameter, 6.0 pounds, available from The Dow Chemical Company) and Versify 3000 (MFR=8g/10 min, 9 pounds) was compounded on a Haake Polylab Micro-18 twin-screw extruder to give 15 pounds of a 40 weight percent concentrate of acrylic beads in Versify 3000.

Sample 1 was prepared by casting a tri-layer film containing the concentrate described above on a 3-layer Collin cast film line. Layer A was a skin layer comprising the concentrate containing acrylic beads to provide a matte appearance. Layers B and C were base layers of Versify 3000, to provide structural support.

A reference tri-layer film without acrylic beads (Comparative Sample A) was also cast with the same layer thicknesses. The formulations of the samples are shown below.

### Sample A:

Feed Rate = 6 kg/hr, 210°C melt temperature, 12.6 mils gauge
A Layer - Versify 3000 @ 5%
B Layer - Versify 3000 @ 35%
C Layer - Versify 3000 @ 60%

### Sample 1:

Feed Rate = 6 kg/hr, 210°C melt temperature, 12.6 mils gauge
A Layer - Versify 3000 + .85 micron beads @ 5%
B Layer - Versify 3000 @ 35%
C Layer - Versify 3000 @ 60%

The films were then biaxially stretched, 3x3 or 4x4 using an Iwamoto stretcher Model # BIX- 703. The stretching was performed at 125°C, with 2 minutes pre-heat time, 30mm / second stretch rate, and 2 minutes cooling after stretching.

The 4x4 stretched film A is labeled "Aa"; the 3x3 stretched film 1 is labeled "1a"; and the 4x4 stretched film 1 is labeled "1b".

Details of film thickness before and after stretching are shown in Table 1, below.

**Table 1: Details of Films, Showing Compositions and Thicknesses Before and After Stretching**

| | Weight % Composition Layer A | Weight % Composition Layer B | | | Thickness Layer A (microns) | | Thickness Layer B (microns) | |
|---|---|---|---|---|---|---|---|---|
| Sample | Versify 3000 | Versify 3000 | 0.85 micron beads | Stretching Degree | Before stretch | After stretch | Before stretch | After stretch |
| Aa | 100 | 100 | 0 | 4X4 (biaxial) | 304 | 19 | 16 | 1 |
| 1a | 100 | 60 | 40 | 3X3 (biaxial) | 304 | 33.8 | 16 | 1.78 |
| 1b | 100 | 60 | 40 | 4X4 (biaxial) | 304 | 19 | 16 | 1 |

Optical properties of the sample films were measured with a BYK Gardner Haze-Gard plus; transmittance and haze were measured in accordance to the ASTM method D1003 and clarity was measured in accordance to the ASTM method D1746.
The results are shown in Table 2.

**Table 2: Optical Data for Unstretched and Stretched Films**

| **Sample** | **Beads** | **Stretched** | **Transmittance (%)** | **Haze (%)** | **Clarity (%)** |
|---|---|---|---|---|---|
| A | No | No | 94 | 13.8 | 92.3 |
| 1 | Yes | No | 94.6 | 43.3 | 73.7 |
| Aa | No | 4x4 | 93.8 | 2.38 | 98.4 |
| 1a | Yes | 3x3 | 95.3 | 53.8 | 96.8 |
| 1b | Yes | 4x4 | 96.1 | 60.4 | 92.5 |

The data in Table 2 shows that the presence of the acrylic beads in the stretched films gives rise to a large increase in haze relative to the films without acrylic beads, with minimal influence on transmittance. Also, the haze and clarity of the film containing acrylic beads both increase significantly upon stretching (compared to the unstretched film).

## Claims

1. A film comprising:
a) at least one base layer comprising a thermoplastic polymeric matrix material; and
b) a skin layer comprising a thermoplastic polymeric matrix material and from 5 wt % to 80 wt % of polymeric particles having an average particle diameter from 0.5 µm to 15 µm, a refractive index from 1.46 to 1.7, and at least 60 mole % of acrylic monomer units wherein the film is stretched by a factor of 2 to 8 uniaxially or biaxially;
and wherein after stretching, the skin layer has a thickness that is between 50% and 200% of the diameter of the polymeric particles.

2. A film in accordance with claim 1 wherein the thermoplastic polymeric matrix material comprises at least one polyolefin.

3. A film in accordance with claim 2 wherein the polyolefin is selected from the group consisting of polypropylene, polyethylene, polybutylene and copolymers and blends thereof.

4. A film in accordance with any one of the preceding claims wherein the polymeric particles have a continuous refractive index gradient.

5. A film in accordance with claim 4 wherein the polymeric particles have a refractive index at the surface from 1.46 to 1.7 and a refractive index at the center from 1.45 to 1.53.

6. A film in accordance with any one of the preceding claims wherein the polymer particles have an average particle diameter from 0.5 µm to 10 µm.

7. A film in accordance with any one of the preceding claims wherein the combined thickness of the base layer(s) is at least a factor of 2 greater than the skin layer after stretching.

8. The film of any one of the preceding claims in which the polymeric particles comprise at least 70 mole % of acrylic and styrenic monomer units.

9. A film in accordance with any one of the preceding claims wherein the film has a haze in the range from 40% to 99% after stretching.

10. A film in accordance with any one of the preceding claims wherein after stretching the film has a transmittance in the range of 85% to 98%.

11. A film in accordance with any one of the preceding claims wherein the polymeric particles are present in the skin layer in a range of from 30 wt % to 80 wt %.

12. A method of preparing a film comprising
a) preparing a concentrate comprising
i) a thermoplastic polymeric matrix material; and
ii) polymeric particles having an average particle diameter from 0.5 µm to 15 µm, a refractive index from 1.46 to 1.7 and at least 60 mole % of acrylic monomer units;
b) forming a multi-layer cast or blown film wherein the film comprises at least two layers, and where the external layer comprises the concentrate of step a); and
c) stretching the film at a temperature above the crystallization temperature of the thermoplastic polymeric matrix material, uni-axially, or bi-axially.

13. A method in accordance with claim 12 wherein the thermoplastic polymeric matrix material of the external layer is the same as or different than the thermoplastic polymeric material of any of the other layers.

14. A magazine or book cover prepared using the film of any one of claims 1-11.

15. A food package prepared from using the film of any one of claims 1-11.

## Patentansprüche

1. Eine Folie, die Folgendes beinhaltet:
a) mindestens eine Basisschicht, die ein thermoplastisches polymeres Matrixmaterial beinhaltet; und
b) eine Randschicht, die ein thermoplastisches polymeres Matrixmaterial und zu 5 Gew.-% bis 80 Gew.-% Polymerpartikel mit einem durchschnittlichen Partikeldurchmesser von 0,5 µm bis 15 µm, einem Brechungsindex von 1,46 bis 1,7 und mindestens 60 Mol-% Acrylmonomereinheiten beinhaltet
wobei die Folie einachsig oder zweiachsig um einen Faktor von 2 bis 8 gedehnt ist; und wobei die Randschicht nach dem Dehnen eine Dicke aufweist, die zwischen 50 % und 200 % des Durchmessers der Polymerpartikel liegt.

2. Folie gemäß Anspruch 1, wobei das thermoplastische polymere Matrixmaterial mindestens ein Polyolefin beinhaltet.

3. Folie gemäß Anspruch 2, wobei das Polyolefin aus der Gruppe ausgewählt ist, die aus Polypropylen, Polyethylen, Polybutylen und Copolymeren und Mischungen davon besteht.

4. Folie gemäß einem der vorhergehenden Ansprüche, wobei die Polymerpartikel einen kontinuierlichen Brechungsindexgradienten aufweisen.

5. Folie gemäß Anspruch 4, wobei die Polymerpartikel einen Brechungsindex an der Oberfläche von 1,46 bis 1,7 und einen Brechungsindex in der Mitte von 1,45 bis 1,53 aufweisen.

6. Folie gemäß einem der vorhergehenden Ansprüche, wobei die Polymerpartikel einen durchschnittlichen Partikeldurchmesser von 0,5 µm bis 10 µm aufweisen.

7. Folie gemäß einem der vorhergehenden Ansprüche, wobei die kombinierte Dicke der Basisschicht(en) nach dem Dehnen um mindestens einen Faktor von 2 größer als die Randschicht ist.

8. Folie gemäß einem der vorhergehenden Ansprüche, wobei die Polymerpartikel mindestens 70 Mol-% Acryl- und Styrolmonomereinheiten beinhalten.

9. Folie gemäß einem der vorhergehenden Ansprüche, wobei die Folie eine Trübung im Bereich von 40 % bis 99 % nach dem Dehnen aufweist.

10. Folie gemäß einem der vorhergehenden Ansprüche, wobei die Folie nach dem Dehnen einen Durchlassgrad im Bereich von 85 % bis 98 % aufweist.

11. Folie gemäß einem der vorhergehenden Ansprüche, wobei die Polymerpartikel in der Randschicht in einem Bereich von 30 Gew.-% bis 80 Gew.-% vorhanden sind.

12. Ein Verfahren zum Herstellen einer Folie, das Folgendes beinhaltet:
a) Herstellen eines Konzentrats, das Folgendes beinhaltet:
i) ein thermoplastisches polymeres Matrixmaterial; und
ii) Polymerpartikel mit einem durchschnittlichen Partikeldurchmesser von 0,5 µm bis 15 µm, einem Brechungsindex von 1,46 bis 1,7 und mindestens 60 Mol-% Acrylmonomereinheiten;
b) Bilden einer mehrschichtigen Gießfolie oder Blasfolie, wobei die Folie mindestens zwei Schichten beinhaltet, und wobei die externe Schicht das Konzentrat aus Schritt a) beinhaltet; und
c) einachsiges oder zweiachsiges Dehnen der Folie bei einer Temperatur über der Kristallisationstemperatur des thermoplastischen polymeren Matrixmaterials.

13. Verfahren gemäß Anspruch 12, wobei das thermoplastische polymere Matrixmaterial der externen Schicht das gleiche wie oder anders als das thermoplastische polymere Material einer der anderen Schichten ist.

14. Ein Einband für eine Zeitschrift oder ein Buch, der unter Verwendung der Folie gemäß einem der Ansprüche 1-11 hergestellt wird.

15. Eine Lebensmittelpackung, die unter Verwendung der Folie gemäß einem der Ansprüche 1-11 hergestellt wird.

## Revendications

1. Un film comprenant :
a) au moins une couche de base comprenant un matériau matrice polymère thermoplastique ; et
b) une couche de revêtement comprenant un matériau matrice polymère thermoplastique et de 5 % en poids à 80 % en poids de particules polymères ayant un diamètre de particule moyen allant de 0,5 µm à 15 µm, un indice de réfraction allant de 1,46 à 1,7, et au moins 60 % en moles d'unités monomère acrylique
où le film est étiré par un facteur de 2 à 8 de façon uniaxiale ou biaxiale ;
et où après étirement, la couche de revêtement a une épaisseur qui est comprise entre 50 % et 200 % du diamètre des particules polymères.

2. Un film conformément à la revendication 1 où le matériau matrice polymère thermoplastique comprend au moins une polyoléfine.

3. Un film conformément à la revendication 2 où la polyoléfine est sélectionnée dans le groupe constitué de polypropylène, polyéthylène, polybutylène et copolymères et mélanges homogènes de ceux-ci.

4. Un film conformément à n'importe laquelle des revendications précédentes où les particules polymères ont un gradient d'indice de réfraction continu.

5. Un film conformément à la revendication 4 où les particules polymères ont un indice de réfraction au niveau de la surface allant de 1,46 à 1,7 et un indice de réfraction au niveau du centre allant de 1,45 à 1,53.

6. Un film conformément à n'importe laquelle des revendications précédentes où les particules polymères ont un diamètre de particule moyen allant de 0,5 µm à 10 µm.

7. Un film conformément à n'importe laquelle des revendications précédentes où l'épaisseur combinée de la ou des couches de base est supérieure d'au moins un facteur de 2 à la couche de revêtement après étirement.

8. Le film de n'importe laquelle des revendications précédentes dans lequel les particules polymères comprennent au moins 70 % en moles d'unités monomère acrylique et styrénique.

9. Un film conformément à n'importe laquelle des revendications précédentes où le film a un trouble compris dans la gamme allant de 40 % à 99 % après étirement.

10. Un film conformément à n'importe laquelle des revendications précédentes où après étirement le film a un coefficient de transmission compris dans la gamme allant de 85 % à 98 %.

11. Un film conformément à n'importe laquelle des revendications précédentes où les particules polymères sont présentes dans la couche de revêtement dans une gamme allant de 30 % en poids à 80 % en poids.

12. Une méthode de préparation d'un film comprenant
a) la préparation d'un concentrat comprenant
i) un matériau matrice polymère thermoplastique ; et
ii) des particules polymères ayant un diamètre de particule moyen allant de 0,5 µm à 15 µm, un indice de réfraction allant de 1,46 à 1,7 et au moins 60 % en moles d'unités monomère acrylique ;
b) la formation d'un film moulé ou soufflé multicouche où le film comprend au moins deux couches, et où la couche externe comprend le concentrat de l'étape a) ; et
c) l'étirement du film à une température au-dessus de la température de cristallisation du matériau matrice polymère thermoplastique, de façon uniaxiale ou biaxiale.

13. Une méthode conformément à la revendication 12 où le matériau matrice polymère thermoplastique de la couche externe est le même que le matériau polymère thermoplastique de n'importe lesquelles des autres couches, ou différent de celui-ci.

14. Une couverture de magazine ou de livre préparée en utilisant le film de n'importe laquelle des revendications 1 à 11.

15. Un emballage alimentaire préparé grâce à l'utilisation du film de n'importe laquelle des revendications 1 à 11.
